# EUROPÄISCHE PATENTSCHRIFT

(11) **EP 3 248 136 B1**
(45) Veröffentlichungstag und Bekanntmachung des Hinweises auf die Patenterteilung: **23.12.2020**
(21) Anmeldenummer: 16701726.8
(22) Anmeldetag: 21.01.2016
(51) Int. Cl.: G06F 21/74, G06F 21/57, G06F 21/54

(54) **VERFAHREN ZUM BETREIBEN EINER COMPUTEREINHEIT MIT EINER SICHEREN LAUFZEITUMGEBUNG SOWIE EINE SOLCHE COMPUTEREINHEIT**
METHOD FOR OPERATING A COMPUTER UNIT WITH A SECURE RUNTIME ENVIRONMENT, AND SUCH A COMPUTER UNIT
PROCÉDÉ DE FONCTIONNEMENT D'UNE UNITÉ D'ORDINATEUR AVEC UN ENVIRONNEMENT DE TEMPS D'EXÉCUTION SÉCURISÉ ET UNITÉ D'ORDINATEUR

(30) Priorität: 22.01.2015 DE 102015000804
(43) Veröffentlichungstag der Anmeldung: 29.11.2017
(73) Patentinhaber: Giesecke+Devrient Mobile Security GmbH, 81677 München (DE)
(72) Erfinder: BAUER, Sven, 85591 Vaterstetten (DE)
(86) Internationale Anmeldenummer: PCT/EP2016/000111
(87) Internationale Veröffentlichungsnummer: WO 2016/116278

(56) Entgegenhaltungen:
- EP-A1- 2 759 955
- WO-A1-2013/185888
- US-A1- 2002 049 909
- US-A1- 2012 331 550
- US-A1- 2013 281 058

## Beschreibung

### Gebiet der Erfindung

Die Erfindung betrifft ein Verfahren zum Betreiben einer Computereinheit mit einer sicheren Laufzeitumgebung sowie eine solche Computereinheit. Insbesondere betrifft die Erfindung ein Verfahren zum Betreiben eines mobilen Endgeräts mit einer sicheren Laufzeitumgebung sowie ein solches mobiles Endgerät.

### Hintergrund der Erfindung

Mehr und mehr werden mobile Endgeräte in Form von Smartphones dazu verwendet, digitale (elektronische) Transaktionen durchzuführen, beispielsweise das bar-geldlose Bezahlen an einem NFC-Terminal oder der Kauf einer Ware oder einer Dienstleistung bei einem Online-Versandhändler. Bei der Durchführung einer solchen digitalen Transaktion interagiert in der Regel eine auf dem Smartphone implementierte Softwareapplikation (kurz "App" genannt) mit einem Terminal bzw. Server. Dabei ist häufig ein kryptographischer Algorithmus, z.B. ein Verschlüsselungsalgorithmus, Teil der auf dem mobilen Endgerät implementierten Softwareapplikation, die auf sicherheitskritische Daten, z.B. PINs, Passwörter, Schlüssel etc., zugreift. In der Vergangenheit sind sicherheitskritische Daten in der Regel auf einem eigenständigen Sicherheitselement des mobilen Endgeräts häufig in Form einer aus dem mobilen Endgerät herausnehmbaren SIM-Karte hinterlegt worden, um diese vor einem Angriff durch unbefugte Person zu schützen.

Ein neuerer Ansatz, der insbesondere bei der Durchführung von digitalen bzw. elektronischen Transaktionen mit einem mobilen Endgerät vorteilhaft eingesetzt werden kann, das kein eigenständiges Sicherheitselement zum sicheren Speichern von sicherheitskritischen Daten aufweist, basiert auf der Idee neben dem herkömmlichen Betriebssystem des mobilen Endgeräts eine sicheren Speichern von sicherheitskritischen Daten aufweist, basiert auf der Idee neben dem herkömmlichen Betriebssystem des mobilen Endgeräts eine sichere Laufzeitumgebung in Form eines sicheren bzw. gehärteten Betriebssystems auf dem mobilen Endgerät bereitzustellen. Eine solche gesicherte Laufzeitumgebung ist dem Fachmann auch unter dem Begriff "Trusted Execution Environment" oder kurz "TEE" bekannt.

Die Global Platform Organisation beschreibt im Allgemeinen mobile Endgerät mit einer zweigeteilten Laufzeitumgebung, nämlich einer normalen Laufzeitumgebung "Rich Execution Environment REE" und einer sicheren Laufzeitumgebung "Trusted Execution Environment TEE". Unter der sicheren Laufzeitumgebung sind speziell gesicherte Sicherheits-Applikationen implementiert, teils mit "Trustlet" bezeichnet. Durch die Sicherheits-Applikationen werden typischerweise Sicherheitsdienste wie Kryptographie, insbesondere Ver- oder/ und Entschlüsselung oder Authentisierung, bereitgestellt, insbesondere an normale Applikationen bereitgestellt, die in der normalen Laufzeitumgebung implementiert sind.

Der Erfindung liegt die Aufgabe zu Grunde, ein verbessertes Verfahren zum Betreiben einer Computereinheit, vorzugweise in Form eines mobilen Endgeräts, mit einer sicheren Laufzeitumgebung sowie eine solche Computereinheit, vorzugsweise in Form eines mobilen Endgeräts, bereitzustellen.

Das Dokument US2012331550A1 aus dem Stand der Technik offenbart ein Verfahren zum Betreiben einer Computereinheit, in der eine normale Laufzeit Umgebung und eine gesicherte Laufzeitumgebung implementiert sind, das Verfahren umfassend ein Berechnen einer schlüsselbasierten Prüffunktion (vergleiche Absatz [0031], secure hash) über Komponenten eines Applet (vergleiche Absätze [0029]-[0032], "assemblies").

Das Dokument US 2013/281058A1 aus dem Stand der Technik offenbart in Absatz [0081] ein sogenanntes Game data set 320 umfassend Programmdateien 328, 330, ... 330, welche auch in Figur 8 gezeigt sind. Gemäß Absatz [0081] ist Programmdatei 328 als Datei 1 bezeichnet, Programmdatei 330 als Datei 2 bezeichnet, Programmdatei 332 als Datei N bezeichnet. Weiter ist in Absatz [0081] ausgeführt, dass die Programmdatei 328 [...] einer Message Authentication Code Funktion 334 zugeführt wird, um einen Message Authentication Code MAC zu erzeugen.

### Zusammenfassung der Erfindung

Die Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Gemäß der Erfindung wird ein Verfahren zum Betreiben einer Computereinheit mit einem Prozessor, auf dem eine normale Laufzeitumgebung und eine gesicherte Laufzeitumgebung implementiert sind, und einer Speichereinheit zum Speichern von zu speichernden Daten in einer Datei bereitgestellt. Dabei umfasst das Verfahren die folgenden Schritte: das Erstellen einer schlüsselbasierten Prüffunktion einer Verknüpfung der zu speichernden Daten mit einem Datei-Identifier; und das Speichern der zu speichernden Daten zusammen mit dem erstellten Hashwert unter einem Dateinamen in der Speichereinheit.

Erfindungsgemäß wird also die Prüffunktion nicht lediglich über die Daten einer Datei gebildet, d.h. den Inhalt der Datei, sondern in die Berechnung der Prüffunktion fließt ein eindeutiger Datei-Identifier mit ein. Wird beispielsweise ein Angriff durchgeführt, bei welchem eine eigentlich unlesbare Datei mit dem Namen einer lesbaren Datei versehen wird, um die unlesbare Datei lesen zu können, würde beim Lesen der umbenannten Datei die Prüffunktion geprüft, erkannt, dass die Prüffunktion mit einem Datei-Identifier gebildet wurde, der nicht der lesbaren Datei entspricht, und der Lesezugriff verwehrt.

Somit ist erfindungsgemäß ein verbessertes Verfahren zum Betreiben einer Computereinheit geschaffen.

In einem anderen Angriffs-Szenario ist im Endgerät in der sicheren Laufzeitumgebung eine Sicherheits-Applikation ("Trustlet") implementiert, die einen RSA CRT Kryptographiedienst bereitstellt (RSA = Rivest Shamir Adleman, CRT = Chinese Remainder Theoreme). Die RSA CRT Schlüssel dieser Sicherheits-Applikation sind in einzelnen Dateien abgelegt, die mit den Namen der RSA CRT Schlüsselkomponenten "p", "q" usw bezeichnet sind. Der Inhalt jeder der Dateien ist verschlüsselt und mit einem MAC (alternativ sonstigen Prüffunktion) über den Dateiinhalt versehen. Somit können die Dateien p und q nicht ausgelesen werden und die Daten in den Dateien auch nicht unbemerkt geändert werden. Wird allerdings der Inhalt von "q" mit dem Inhalt von "p" überschrieben, kann die neue Datei "q" von der Sicherheits-Applikation gelesen, akzeptiert und entschlüsselt werden, denn der MAC über den Datei-Inhalt ist ja korrekt. Der RSA CRT der Sicherheits-Applikation rechnet dann mit Modulus p^{∗}p statt p^{∗}q, was nicht passieren dürfte. Eine mit einer solchen falschen Berechnung entstehende kaputte Signatur kann verwendet werden, um den Modulus zu faktorisieren.

Erfindungsgemäß wird der MAC - bzw. allgemein die Prüffunktion - aber nicht lediglich über den Dateiinhalt gebildet, sondern beinhaltet den Dateinamen. Mit der erfindungsgemäßen Prüffunktion wäre dieser Angriff nicht möglich gewesen.

Ein weiteres einfacheres Beispiel für einen Angriff, der mit der Erfindung verhindert werden kann, ist das einer (Sicherheits-)Applikation, die eine verschlüsselte, mit einer Prüffunktion versehene (z.B. geMACte) Datei namens "public" und eine namens "private" hat. Den entschlüsselten Inhalt von "public" gibt die (Sicherheits-)Applikation aus, den Inhalt von "private" nicht. Ohne die Erfindung könnte ein Angreifer den Inhalt von "public" mit dem Inhalt von "private" überschreiben und sich dann "public" ausgeben lassen, um an den entschlüsselten Inhalt von "private" zu kommen.

Vorzugsweise handelt es sich bei der Prüffunktion um einen schlüsselbasierten Hashwert, insbesondere um einen MAC (message authentication code), oder alternativ um eine Signatur, die mit dem privaten Schlüssel eines asymmetrischen public-private Schlüsselpaars erstellt ist und mit dem entsprechenden öffentlichen Schlüssel verifizierbar ist.

Gemäß bevorzugten Ausführungsformen der Erfindung ist der Datei-Identifier der Dateiname.

Vorzugsweise ist die Verknüpfung der zu speichernden Daten mit dem Datei-Identifier eine Konkatenierung der zu speichernden Daten mit dem Datei-Identifier.

Gemäß bevorzugten Ausführungsformen der Erfindung werden die zu speichernden Daten zusammen mit der erstellten Prüffunktion unter einem Dateinamen in einem nichtflüchtigen Speicher der Speichereinheit gespeichert.

Gemäß einem zweiten Aspekt der Erfindung wird eine Computereinheit mit einem Prozessor, auf dem eine normale Laufzeitumgebung und eine gesicherte Laufzeitumgebung implementiert sind, und einer Speichereinheit zum Speichern von zu speichernden Daten in einer Datei bereitgestellt. Dabei ist die Computereinheit dazu ausgestaltet: eine schlüsselbasierte Prüffunktion einer Verknüpfung der zu speichernden Daten mit einem Datei-Identifier zu erstellen; und die zu speichernden Daten zusammen mit der erstellten Prüffunktion unter einem Dateinamen in der Speichereinheit zu speichern.

Gemäß bevorzugten Ausführungsformen der Erfindung ist die Computereinheit dazu ausgestaltet, die zu speichernden Daten zusammen mit der erstellten Prüfsumme unter einem Dateinamen in einem nichtflüchtigen Speicher der Speichereinheit zu speichern.

Ein erfindungsgemäßes Verfahren zum gesicherten Zugriff auf eine Datei in einer Computereinheit umfasst die folgenden Schritte:
Senden eines Zugriffskommandos zum Zugreifen auf die Datei an die Computereinheit, wobei das Zugriffskommando eine Angabe über einen Datei-Identifier der Datei umfasst oder mit sich führt; Prüfen der in der Speichereinheit abgespeicherten Prüffunktion, um zu ermitteln, ob der Datei-Identifier des Zugriffskommandos mit dem bei der Bildung der Prüffunktion verwendeten Datei-Identifier übereinstimmt; und nur höchstens im Fall, dass die Datei-Identifier übereinstimmen, Ausführen des Zugriffskommandos, um Zugriff auf die Datei zu gewähren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnung verwiesen, in der zeigt:

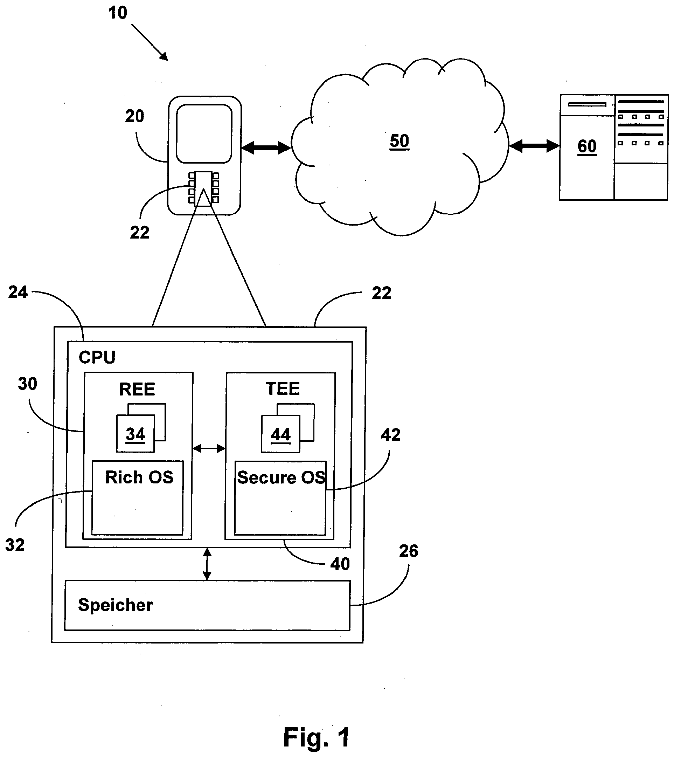

- Fig. 1: eine schematische Darstellung eines Kommunikationssystems mit einer Computereinheit in Form eines Mobiltelefons, bei dem die vorliegende Erfindung vorteilhaft eingesetzt werden.

Figur 1 zeigt eine schematische Darstellung eines beispielhaften Kommunikationssystems 10, bei dem die Erfindung vorteilhaft zum Einsatz kommen kann. Das Kommunikationssystem 10 umfasst eine Computereinheit 20 in Form eines mobilen Endgeräts, vorzugsweise in Form eines Smartphones bzw. eines Mobiltelefons. Das mobile Endgerät 20 ist dazu ausgestaltet, über einen Kommunikationskanal 50 mit einem Server bzw. einem Terminal 60 zu kommunizieren. Bei dem Kommunikationskanal 50 kann es sich beispielsweise um das Internet, ein Mobilfunknetzwerk, einen NFC-Kanal oder dergleichen handeln. Der Server 60 könnte ein NFC-Terminal eines Service-Anbieters sein, mit dem eine Softwareapplikation, beispielsweise die Softwareapplikationen 34 oder 44, auf dem mobilen Endgerät 20 Transaktionen durchführen kann, z.B. eine Payment-Transaktion, bei dem die Softwareapplikation auf dem mobilen Endgerät 20 einen Bezahlvorgang abwickelt.

Das mobile Endgerät 20 verfügt über einen Chip 22 mit einer zentralen Verarbeitungseinheit ("central processing unit"; CPU) beispielsweise in Form eines Mikroprozessors 24. Bekanntermaßen gehören zu den primären Aufgaben des Prozessors 24 das Ausführen von arithmetischen und logischen Funktionen und das Lesen und Schreiben von Datenelementen, wie dies durch eine auf dem Prozessor 24 ablaufende Softwareapplikation definiert wird. Der Übersichtlichkeit halber ist eine bevorzugte Architektur des Prozessors 24 in Figur 1 außerhalb des mobilen Endgeräts 20 noch einmal schematisch im Detail dargestellt.

Der Prozessor 24 steht in Kommunikationsverbindung mit einer Speichereinheit 26, die vorzugsweise einen flüchtigen Arbeitsspeicher (RAM) beispielsweise zur Aufnahme der Maschinenbefehle einer von dem Prozessor 24 auszuführenden Softwareapplikation umfasst. Vorzugsweise umfasst die Speichereinheit 26 ferner einen nichtflüchtigen, vorzugsweise wieder beschreibbaren Speicher, um beispielsweise im unbestromten Zustand des mobilen Endgeräts 20 den Programmcode einer von dem Prozessor 24 auszuführenden Softwareapplikation aufzunehmen. Vorzugsweise handelt es sich bei dem nichtflüchtigen, wieder beschreibbaren Speicher um einen Flash-Speicher (Flash-EEPROM). Dabei kann es sich beispielsweise um einen Flash-Speicher mit einer NAND- oder einer NOR-Architektur handeln. Selbstverständlich kann die Speichereinheit 26 auch einen Festwertspeicher ("read only memory"; ROM) umfassen.

Wie in Figur 1 schematisch dargestellt ist, sind in dem Prozessor 24 zur Laufzeit eine normale, nicht extra gesicherte Laufzeitumgebung 30 (auch "Normal Execution Environment" oder "Rich Execution Environment" kurz "REE" genannt) sowie eine gesicherte Laufzeitumgebung 40 (auch "Trusted Execution Environment" oder kurz TEE genannt) implementiert, d.h. der Prozessor 24 stellt einen "normalen", in der Regel nichtvertrauenswürdigen Bereich und einen "sicheren", vertrauenswürdigen Bereich bereit. Dabei wird überwacht, ob der Prozessor 24 in dem vertrauenswürdigen Bereich (TEE) oder in dem nichtvertrauenswürdigen Bereich (REE) betrieben wird. Ferner wird ein Umschalten zwischen dem vertrauenswürdigen und dem nichtvertrauenswürdigen Bereich überwacht. Eine gesicherte Laufzeitumgebung bzw. TEE im Sinne der Erfindung ist durch die Global Platform Organisation beschrieben und wird beispielsweise von der Firma "Trustonic" angeboten.

In der hier beschriebenen bevorzugten Ausführungsform läuft auf der TEE 40 ein sicheres Betriebssystem 42 (Secure OS). Demgegenüber enthält die normale Laufzeitumgebung NEE 30 ein herkömmliches Mobiltelefon-Betriebssystem 32. Für den bevorzugten Fall, dass es sich bei dem mobilen Endgerät 20 um ein Smartphone handelt, ist das in der normalen Laufzeitumgebung REE 30 implementierte Betriebssystem 32 ein sogenanntes "Rich OS" mit einem weitreichenden Funktionsumfang. Bei einem solchen Betriebssystem des mobilen Endgeräts 20 kann es sich z.B. um Android, Apple iOS, Windows Phone oder dergleichen handeln.

Die TEE 40 dient zur Ausführung von sicherheitskritischen Applikationen mit Hilfe des mobilen Endgeräts 20. Die gesicherte Laufzeitumgebung TEE 40 ist dabei isoliert von der normalen Laufzeitumgebung REE 30 und verkapselt sicherheitskritische Applikationen, wodurch ein effizienter Schutz gegenüber Angriffen unbefugter Dritter erreicht wird. Beispielhaft läuft in der bevorzugten Ausführungsform in Figur 1 die sicherheitskritische Applikation 44 in der TEE 40. Im Unterschied hierzu laufen in der normalen Laufzeitumgebung REE 30 herkömmliche Applikationen, wobei in Figur 1 beispielhaft eine Applikation 34 bezeichnet ist. Die Applikationen aus dem nicht-vertrauenswürdigen Bereich REE 30, z.B. die Applikation 34, haben in der Regel keinen Zugriff auf die Applikationen im vertrauenswürdigen Bereich TEE 40, z.B. die Applikation 44.

Herkömmlicherweise werden dauerhaft zu speichernde Daten sowohl von Applikationen aus der TEE 40, also z.B. von der sicherheitskritischen Applikation 44, als auch von Applikationen aus der REE 30, also z.B. von der Applikation 34, in dem nicht-flüchtigen Bereich der Speichereinheit 26 gespeichert, der, wie bereits vorstehend beschrieben, vorzugsweise als Flash-Speicher ausgestaltet sein kann. Das bedeutet, dass die Daten von Applikationen aus der TEE 40 im Prinzip im normalen Dateisystem des mobilen Endgeräts 20 liegen, das auch vom nicht-vertrauenswürdigen Bereich REE 30 benutzt wird. Um die Daten von Applikationen aus der TEE 40 jedoch vor einem Zugriff aus dem nicht-vertrauenswürdigen Bereich REE 30 zu schützen, wird über diese Daten herkömmlicherweise ein schlüsselbasierter Hashwert in Form eines MAC ("Message Authentication Code") gebildet und der MAC zusammen mit den verschlüsselten Daten unter einem Dateinamen auf der Speichereinheit 26 hinterlegt. Wie die zwei folgenden Beispiele deutlich machen, weist dieser herkömmliche Ansatz jedoch Sicherheitslücken auf.

Beim ersten Beispiel legt die in der TEE 40 laufende sicherheitskritische Applikation 44 in der Speichereinheit 26 eine Datei mit dem Namen "Secret" mit geheimen Daten an, die nicht lesbar sein sollen, sowie eine Datei mit dem Namen "Public" mit öffentlichen Daten, auf die auch aus der REE 30 zugegriffen werden kann. Ein Angreifer kann jetzt die Datei mit dem Namen "Public" löschen, eine Kopie der Datei mit dem Namen "Secret" erstellen und diese Kopie mit dem Namen "Public" versehen. Lässt sich der Angreifer dann den Inhalt der neuen Datei mit den Namen "Public" anzeigen, bekommt er den Inhalt der Datei mit dem Namen "Secret".

Beim zweiten Beispiel legt die sicherheitskritische Applikation 44 in der TEE 40 in der Speichereinheit 26 die Komponenten eines RSA-CRT-Schlüssels (wobei die Abkürzung "CRT" für "Chinese Remainder Theorem" steht) in den Dateien mit den Namen "p", "q", "dp", "dq" und "qi" ab. Überschreibt ein Angreifer z.B. den Inhalt der Datei mit dem Namen "p" mit dem Inhalt der Datei mit dem Namen "q", kann der Angreifer erfolgreich einen Bellcore-Angriff durchführen, wie dieser im Detail in der folgenden Veröffentlichung beschrieben ist, auf die hiermit vollumfänglich verwiesen wird: Boneh, De-Millo, Lipton, "On the importance of checking cryptographic protocols for faults", Journal of Cryptology, Vol. 14, No. 2,2001.

Um insbesondere die vorstehend beschriebenen Sicherheitslücken des herkömmlichen Ansatzes zu schließen, ist erfindungsgemäß die folgende Art und Weise der Datenspeicherung von Daten in der TEE 40 vorgesehen. Erfindungsgemäß wird der MAC nicht lediglich über die Daten einer Datei, d.h. über den Inhalt der Datei gebildet, sondern erfindungsgemäß fließt in die Berechnung des MAC ein eindeutiger Datei-Identifier mit ein. Unter einem Einfließen in die Berechnung des MAC wird erfindungsgemäß eine Konkatenierung oder eine andere Operation verstanden, die einen Datei-Identifier mit den Daten der Datei verknüpft, bevor der MAC auf das Ergebnis dieser Operation angewendet wird. Bei dem eindeutigen Datei-Identifier kann es sich beispielsweise um einen eindeutigen Dateinamen, eine eindeutige Dateinummer oder einen anderen Identifier handeln, mittels dem sich die entsprechende Datei im Dateisystem der Speichereinheit 26 eindeutig identifizieren lässt.

## Patentansprüche

1. Verfahren zum Betreiben einer Computereinheit (20) mit einem Prozessor (24), auf dem eine normale Laufzeitumgebung (30) und eine gesicherte Laufzeitumgebung (40) implementiert sind, und einer Speichereinheit (26) zum Speichern von zu speichernden Daten in einer Datei, wobei das Verfahren die folgenden Schritte umfasst:
das Erstellen einer schlüsselbasierten Prüffunktion über eine Verknüpfung der zu speichernden Daten mit einem Datei-Identifier; und
das Speichern der zu speichernden Daten zusammen mit der erstellten Prüffunktion unter einem Dateinamen in der Speichereinheit (26).

2. Verfahren nach Anspruch 1, wobei als Prüffunktion ein schlüsselbasierter Hashwert, insbesondere ein MAC, oder eine auf einem Public-Private-Schlüsselpaar basierende Signatur vorgesehen ist.

3. Verfahren nach Anspruch 1 oder 2, wobei als Datei-Identifier ein Dateiname der Datei vorgesehen ist.

4. Verfahren nach einem der Ansprüche 1 bis 3, wobei die Verknüpfung der zu speichernden Daten mit dem Datei-Identifier eine Konkatenierung der zu speichernden Daten mit dem Datei-Identifier ist.

5. Verfahren nach einem der Ansprüche 1 bis 4, wobei die zu speichernden Daten zusammen mit der erstellten Prüffunktion unter einem Dateinamen in einem nichtflüchtigen Speicher der Speichereinheit (26) gespeichert werden.

6. Computereinheit (20) mit einem Prozessor (24), auf dem eine normale Laufzeitumgebung (30) und eine gesicherte Laufzeitumgebung (40) implementiert sind, und einer Speichereinheit (26) zum Speichern von zu speichernden Daten in einer Datei, wobei die Computereinheit (20) dazu ausgestaltet ist:
eine schlüsselbasierte Prüffunktion über eine Verknüpfung der zu speichernden Daten mit einem Datei-Identifier zu erstellen; und
die zu speichernden Daten zusammen mit der erstellten Prüffunktion unter einem Dateinamen in der Speichereinheit (26) zu speichern.

7. Computereinheit (20) nach Anspruch 6, wobei als Prüffunktion ein schlüsselbasierter Hashwert, insbesondere ein MAC (message authentication code), oder eine auf einem Public-Private-Schlüsselpaar basierende Signatur vorgesehen ist.

8. Computereinheit (20) nach Anspruch 6 oder 7, wobei der Datei-Identifier der Dateiname ist.

9. Computereinheit (20) nach einem der Ansprüche 6 bis 8, wobei die Verknüpfung der zu speichernden Daten mit dem Datei-Identifier eine Konkatenierung der zu speichernden Daten mit dem Datei-Identifier ist.

10. Computereinheit (20) nach einem der Ansprüche 6 bis 9, wobei die Computereinheit (20) dazu ausgestaltet ist, die zu speichernden Daten zusammen mit dem erstellten Hashwert unter einem Dateinamen in einem nichtflüchtigen Speicher der Speichereinheit (26) zu speichern.

11. Verfahren zum gesicherten Zugriff auf eine Datei in einer Computereinheit (20) welche nach einem der Verfahren von Anspruch 1 bis 5 gespeichert wurde, wobei das Verfahren die folgenden Schritte umfasst:
Senden eines Zugriffskommandos zum Zugreifen auf die Datei an die Computereinheit (20), wobei das Zugriffskommando eine Angabe über einen Datei-Identifier der Datei umfasst oder mit sich führt;
Prüfen der in der Speichereinheit (26) abgespeicherten Prüffunktion, um zu ermitteln, ob der Datei-Identifier des Zugriffskommandos mit dem bei der Bildung der Prüffunktion verwendeten Datei-Identifier übereinstimmt; und
nur höchstens im Fall, dass die Datei-Identifier übereinstimmen, Ausführen des Zugriffskommandos, um Zugriff auf die Datei zu gewähren.

## Claims

1. A method for operating a computer unit (20) having a processor (24) on which a normal runtime environment (30) and a secure runtime environment (40) are implemented, and a storage unit (26) for storing data to be stored in a file, wherein the method comprises the following steps:
the creating of a key-based check function by a linking of the data to be stored with a file identifier; and
the storing of the data to be stored together with the created check function under a file name in the storage unit (26).

2. The method according to claim 1, wherein as a check function a key-based hash value, in particular a MAC, or a signature based on a public-private key pair is provided.

3. The method according to claim 1 or 2, wherein as a file identifier a file name of the file is provided.

4. The method according to any of claims 1 to 3, wherein the linkage of the data to be stored with the file identifier is a concatenation of the data to be stored with the file identifier.

5. The method according to any of claims 1 to 4, wherein the data to be stored are stored together with the created check function under a file name in a nonvolatile storage of the storage unit (26).

6. A computer unit (20) having a processor (24) on which a normal runtime environment (30) and a secure runtime environment (40) are implemented, and a storage unit (26) for storing data to be stored in a file, wherein the computer unit (20) is configured to:
create a key-based check function via a linking of the data to be stored with a file identifier; and to
store the data to be stored together with the created check function under a file name in the storage unit (26).

7. The computer unit (20) according to claim 6, wherein as a check function a key-based hash value, in particular a MAC (message authentication code), or a signature based on a public-private key pair is provided.

8. The computer unit (20) according to claim 6 or 7, wherein the file identifier is the file name.

9. The computer unit (20) according to any of claims 6 to 8, wherein the linkage of the data to be stored with the file identifier is a concatenation of the data to be stored with the file identifier.

10. The computer unit (20) according to any of claims 6 to 9, wherein the computer unit (20) is configured to store the data to be stored are together with the created hash value under a file name in a nonvolatile storage of the storage unit (26).

11. A method for securely accessing a file on a computer unit (20) which was stored according to any method from claim 1 to 5, wherein the method comprises the following steps:
sending an access command for accessing the file to the computer unit (20), wherein the access command comprises or carries a statement about a file identifier of the file;
checking the check function stored in the storage unit (26) to establish whether the file identifier of the access command matches the file identifier employed upon forming the check function; and
only at most in the case that file identifiers match, executing the access command to grant access to the file.

## Revendications

1. Procédé de fonctionnement d'une unité d'ordinateur (20) ayant un processeur (24) sur lequel un environnement normal d'exécution (30) et environnement sécurisé d'exécution (40) sont mis en œuvre, et une unité de mémoire (26) pour la mémorisation de données à mémoriser dans un fichier, cependant que le procédé comprend les étapes suivantes :
la création d'une fonction de contrôle basée sur une clé par l'intermédiaire d'une liaison des données à mémoriser et d'un identifiant de fichier ; et
la mémorisation des données à mémoriser, conjointement avec la fonction de contrôle créée, sous un nom de fichier dans l'unité de mémoire (26).

2. Procédé selon la revendication 1, cependant que, en tant que fonction de contrôle, une valeur de hachage basée sur une clé, en particulier un MAC, ou une signature basée sur une paire de clés publique-privée est prévue.

3. Procédé selon la revendication 1 ou 2, cependant que, en tant qu'identifiant de fichier, un nom de fichier du fichier est prévue.

4. Procédé selon une des revendications de 1 à 3, cependant que la liaison des données à mémoriser et de l'identifiant de fichier est une mise en contact des données à mémoriser avec l'identifiant de fichier.

5. Procédé selon une des revendications de 1 à 4, cependant que les données à mémoriser sont mémorisées en même temps que la fonction de contrôle créée, sous un nom de fichier dans une mémoire non volatile de l'unité de mémoire (26).

6. Unité d'ordinateur (20) ayant un processeur (24) sur lequel un environnement normal d'exécution (30) et environnement sécurisé d'exécution (40) sont mis en œuvre, et une unité de mémoire (26) pour la mémorisation de données à mémoriser dans un fichier, cependant que l'unité d'ordinateur (20) est configurée pour :
créer une fonction de contrôle basée sur une clé par l'intermédiaire d'une liaison des données à mémoriser et d'un identifiant de fichier ; et
mémoriser les données à mémoriser, conjointement avec la fonction de contrôle créée, sous un nom de fichier dans l'unité de mémoire (26).

7. Unité d'ordinateur (20) selon la revendication 6, cependant que, en tant que fonction de contrôle, une valeur de hachage basée sur une clé, en particulier un MAC (message authentication code), ou une signature basée sur une paire de clés publique-privée est prévue.

8. Unité d'ordinateur (20) selon la revendication 6 ou 7, cependant que l'identifiant de fichier est le nom de fichier.

9. Unité d'ordinateur (20) selon une des revendications de 6 à 8, cependant que la liaison des données à mémoriser et de l'identifiant de fichier est une mise en contact des données à mémoriser avec l'identifiant de fichier.

10. Unité d'ordinateur (20) selon une des revendications de 6 à 9, cependant que l'unité d'ordinateur (20) est configurée pour mémoriser les données à mémoriser, en même temps que la valeur de hachage créée, sous un nom de fichier dans une mémoire non volatile de l'unité de mémoire (26).

11. Procédé d'accès sécurisé à un fichier dans une unité d'ordinateur (20), lequel fut mémorisé selon un des procédés des revendications de 1 à 5, cependant que le procédé comprend les étapes suivantes :
envoi, à l'unité d'ordinateur (20), d'une commande d'accès pour l'accès au fichier, cependant que la commande d'accès comprend ou amène avec lui une indication sur un identifiant de fichier du fichier ;
contrôle de la fonction de contrôle mémorisée dans l'unité de mémoire (26), afin de déterminer si l'identifiant de fichier de la commande d'accès coïncide avec l'identifiant de fichier utilisé lors de la constitution de la fonction de contrôle ; et
seulement au plus dans le cas où les identifiants de fichier coïncident entre eux, exécution de la commande d'accès afin d'accorder l'accès au fichier.
